# EUROPEAN PATENT APPLICATION

(11) **EP 4 733 267 A1**
(43) Date of publication of application: **29.04.2026**
(21) Application number: 25210023.5
(22) Date of filing: 21.10.2025
(51) Int. Cl.: C01G 53/506, C01G 53/84, H01M 4/525, H01M 10/052, C01G 53/50

(54) **POSITIVE ELECTRODE ACTIVE MATERIAL AND LITHIUM SECONDARY BATTERY COMPRISING THE SAME**

(30) Priority: 22.10.2024 KR 20240144706
(71) Applicant: ECOPRO BM CO., LTD., Cheongju-si, Chungcheongbuk-do 28116 (KR)
(72) Inventor: RYU, Mun Hwa, 28116 Cheongju-si, Chungcheongbuk-do (KR); MOON, Chae Won, 28116 Cheongju-si, Chungcheongbuk-do (KR); JUNG, Hyun Su, 28116 Cheongju-si, Chungcheongbuk-do (KR); LIM, Ra Na, 28116 Cheongju-si, Chungcheongbuk-do (KR); SHIN, Jae Hoon, 28116 Cheongju-si, Chungcheongbuk-do (KR)
(74) Representative: BCKIP Part mbB

(57) **Abstract**

The present invention relates to a positive electrode active material and a lithium secondary battery comprising the same. More specifically, the present invention relates to a positive electrode active material comprising a lithium transition metal oxide in the form of a single particle composed of one unit particle and/or a quasi-single particle formed by agglomeration of 30 or less unit particles, wherein the positive electrode active material reduces intergranular cracks and intragranular cracks present therein, thereby enabling a lithium secondary battery comprising the positive electrode active material to exhibit long-term stable electrochemical characteristics.

## Description

### BACKGROUND

### 1. Field of the Invention

The present invention relates to a positive electrode active material and a lithium secondary battery comprising the same. More specifically, the present invention relates to a positive electrode active material comprising a lithium transition metal oxide in the form of a single particle composed of one unit particle and/or a quasi-single particle formed by agglomeration of 30 or less unit particles, wherein the positive electrode active material reduces intergranular cracks and intragranular cracks present therein, thereby enabling a lithium secondary battery comprising the positive electrode active material to exhibit long-term stable electrochemical characteristics.

### 2. Discussion of Related Art

Batteries store power by using materials capable of undergoing electrochemical reactions at a positive electrode and a negative electrode. A representative example of batteries is a lithium secondary battery that stores electrical energy by the difference in chemical potential when lithium ions are intercalated/deintercalated into/from the positive electrode and the negative electrode.

The lithium secondary battery is manufactured by using materials capable of reversible intercalation/deintercalation of lithium ions as positive and negative electrode active materials and filling an organic electrolyte or a polymer electrolyte between the positive and negative electrodes.

A lithium transition metal oxide is used as a positive electrode active material for a lithium secondary battery, and as an example, composite oxides such as LiCoO₂, LiMn₂O₄, LiNiO₂, LiMnO₂, and the like are being studied.

Among the positive electrode active materials, LiCoO₂ is the most widely used due to its excellent lifetime characteristics and charge/discharge efficiency, but it has limitations in price competitiveness because cobalt, which is used as a raw material, is expensive due to resource constraints.

Lithium manganese oxides such as LiMnO₂ and LiMn₂O₄ have advantages of excellent thermal safety and low price, but also have problems of low capacity and poor high-temperature characteristics. In addition, a LiNiO₂-based positive electrode active material exhibits battery characteristics such as high discharge capacity, but it is difficult to synthesize the LiNiO₂-based positive electrode active material due to cation mixing between Li and transition metals, thereby causing significant problems in rate characteristics.

Therefore, in order to improve the low rate and cycle characteristics of LiNiO₂ while maintaining its high reversible capacity, ternary lithium transition metal oxides such as the so-called NCM (Ni-Co-Mn) and NCA (Ni-Co-Al), in which part of the nickel is substituted with cobalt, manganese, and/or aluminum, or quaternary lithium transition metal oxides such as NCMA (Ni-Co-Mn-Al) have been developed. Since the reversible capacity is reduced as the nickel content in the ternary or quaternary lithium transition metal oxide decreases, research has been widely conducted to increase the nickel content in the lithium transition metal oxide.

However, as the content of nickel in the lithium transition metal oxide increases, cation mixing increases in the crystal structure, thereby reducing stability or increasing the content of unreacted lithium impurities such as LiOH and Li₂CO₃ on the surface.

In addition, most lithium transition metal oxides are present in the form of secondary particles in which multiple primary particles are agglomerated. As the number of primary particles constituting the secondary particle increases, the specific surface area becomes larger. With an increase in the specific surface area of the lithium transition metal oxide, strain caused by random volume contraction and expansion of the primary particles during repeated charge and discharge cycles may accumulate, leading to the formation of intergranular cracks between adjacent primary particles. Such intergranular cracks within the secondary particle reduce the connectivity between adjacent primary particles and hinder the lithium ion transport mechanism. Furthermore, as the exposed surface of the primary particles increases, side reactions with the electrolyte are promoted, which can drastically reduce the stability of the positive electrode active material.

Therefore, in recent years, in order to solve the above-described problem of intergranular cracks, attempts have been made to reduce the specific surface area of the lithium transition metal oxide by inducing the growth of the primary particles through high-temperature sintering. However, when the growth of the primary particles is induced through high-temperature sintering, the intergranular cracks tend to decrease, but there is a problem that cracks in the primary particles increase.

The cracks present in the primary particles include intragranular cracks present inside the primary particles and surface cracks present on the surface of the primary particles. Similar to the intergranular cracks, the surface cracks present on the surface of the primary particles may increase the exposed surface (surface area) of the primary particles, thereby increasing side reactions with the electrolyte. In addition, when cracks such as intragranular cracks and surface cracks present in the primary particles increase, the resistance to strain caused by random volume contraction and expansion of the primary particles during repeated charge and discharge cycles may be drastically weakened. That is, the more cracks are present in the primary particles or the more cracks accumulate in the primary particles due to repeated charge and discharge cycles, the lifetime of the lithium secondary battery using the positive electrode active material is inevitably drastically reduced.

### SUMMARY OF THE INVENTION

In the lithium secondary battery market, the growth of batteries for electric vehicles is driving overall market expansion, and accordingly, the demand for positive electrode active materials used in such batteries is continuously increasing.

For example, conventionally, lithium secondary batteries using lithium iron phosphate (LFP) have mainly been used from the perspective of ensuring safety, but recently, the use of nickel-based lithium transition metal oxides, which have a larger energy capacity per weight compared to LFP, has been expanding (of course, LFP, which is relatively inexpensive, is still sometimes used for cost reduction).

In addition, nickel-based lithium transition metal oxides, which are mainly used as positive electrode active materials for high-capacity lithium secondary batteries in recent years, generally have compositions of ternary types such as NCM (Ni-Co-Mn) and NCA (Ni-Co-Al), or quaternary types such as NCMA (Ni-Co-Mn-Al).

As described above, most of the ternary or quaternary lithium transition metal oxides have a form of secondary particles in which a plurality of primary particles are agglomerated. On the other hand, the present invention aims to provide a positive electrode active material in which the lithium transition metal oxide is configured to have a single particle form composed of one unit particle and/or a quasi-single particle form formed by agglomeration of 30 or less unit particles, by inducing the growth of the primary particles constituting the lithium transition metal oxide, thereby reducing intergranular cracks in the lithium transition metal oxide while improving the energy density of the positive electrode active material and preventing deterioration of lifetime and stability.

Meanwhile, when the growth of the primary particles, which are unit particles constituting the lithium transition metal oxide, is induced by a method known in the related art, cracks such as intragranular cracks and surface cracks may increase in the lithium transition metal oxide, particularly in the primary particles constituting the lithium transition metal oxide.

Therefore, the present invention aims to provide a positive electrode active material in which the lithium transition metal oxide is configured to have a single particle form composed of one unit particle and/or a quasi-single particle form formed by agglomeration of 30 or less unit particles, wherein the formation of cracks in the unit particles is suppressed and/or alleviated, thereby improving resistance to strain caused by volume contraction and expansion of the unit particles during repeated charge and discharge cycles, and a lithium secondary battery capable of exhibiting long-term stable electrochemical characteristics by using the same.

The objects of the present invention are not limited to those mentioned above (for example, for electric vehicles), and other objects and advantages of the present invention that are not described can be understood from the following description and will be more clearly understood by the embodiments of the present invention. It will also be readily apparent that the objects and advantages of the present invention can be realized by means and combinations thereof as defined in the claims.

According to one aspect of the present invention for solving the above-described technical problem, there is provided a positive electrode active material comprising a lithium transition metal oxide capable of intercalation/deintercalation of lithium.

The lithium transition metal oxide has at least one form selected from a single particle form composed of one unit particle and a quasi-single particle form formed by agglomeration of 30 or less unit particles, thereby being capable of reducing intergranular cracks in the lithium transition metal oxide.

In addition, the lithium transition metal oxide may improve resistance to strain caused by volume contraction and expansion of the unit particles during repeated charge and discharge cycles, by suppressing and/or mitigating the formation of cracks such as intragranular cracks and surface cracks in the unit particles.

A ratio (a1/a) of a total area (a1) of cracks present on the surface of the unit particle relative to a surface area (a) of the unit particle observed from a surface SEM image of the lithium transition metal oxide may be 10% or less, 9% or less, 8% or less, 7.5% or less, or 7.2% or less.

In addition, when a half radius of the unit particle measured from a cross-sectional SEM image of the unit particle is defined as r, cracks in a surface portion where a distance (d) from the center of the unit particle satisfies (2/3)r < d may be more than cracks in a central portion where a distance (d) from the center of the unit particle satisfies 0 ≤ d ≤ (2/3)r.

Therefore, the positive electrode active material according to the present invention may improve long-term stability by reducing cracks present in the surface portion of the unit particle.

The lithium transition metal oxide comprises lithium and a transition metal, and a content of nickel among the transition metals may be 50 mol% or more, 60 mol% or more, 70 mol% or more, 80 mol% or more, or 90 mol% or more. In addition, a content of nickel among the transition metals may be 99 mol% or less, 95 mol% or less, or 90 mol% or less.

The lithium transition metal oxide is represented by Chemical Formula 1 below:

[Chemical Formula 1] LiₐNi_{1-(b+c+d+e)}Co_{b}Mn_{c}M1_{d}M2ₑO₂

wherein, in Chemical Formula 1,
M1 is at least one selected from Na, K, Mg, Ca, Sr, Ba, and Rb,
M2 is at least one selected from B, Ce, Hf, Ta, Cr, F, Al, V, Ti, Fe, Zr, Zn, Si, Y, Nb, Ga, Sn, Mo, W, P, Ge, Nd, Gd, and Cu,
0.85≤a≤1.15, 0≤b≤0.20, 0≤c≤0.20, 0.001≤d≤0.05, 0≤e≤0.10, and 0.5≤1-(b+c+d+e)<1.0.

The content of alkali metal and alkaline earth metal among the total elements excluding lithium in the lithium transition metal oxide may be 0.1 mol% or more and 5.0 mol% or less, 0.5 mol% or more and 4.0 mol% or less, or 1.0 mol% or more and 3.0 mol% or less.

An average particle diameter (D₅₀) of the lithium transition metal oxide present in the single particle form is 1.5 µm or more and 10.0 µm or less, and an average particle diameter (D₅₀) of the lithium transition metal oxide present in the quasi-single particle form may be 3.0 µm or more and 20.0 µm or less.

A number of unit particles observed from a surface SEM image of the lithium transition metal oxide present in the quasi-single particle form may be 20 or less.

A surface shape of the unit particle observed from a surface SEM image of the lithium transition metal oxide has a major axis and a minor axis, and an average value of a length of the major axis of the unit particle may be 2.0 µm or more and 10.0 µm or less.

A surface shape of the unit particle observed from a surface SEM image of the lithium transition metal oxide has a major axis and a minor axis, and an average value of a length of the minor axis of the unit particle may be 1.0 µm or more and less than 10.0 µm.

The positive electrode active material according to the present invention may improve long-term stability of the positive electrode active material by reducing intragranular cracks present in a surface portion of the lithium transition metal oxide in which growth of unit particles has been induced through high-temperature sintering.

In another aspect of the present invention, there is provided a positive electrode comprising the above-described positive electrode active material.

In still another aspect of the present invention, there is provided a lithium secondary battery comprising the above-described positive electrode.

According to the present invention, by inducing growth of primary particles, which are unit particles constituting the lithium transition metal oxide, so that the lithium transition metal oxide has a single particle form composed of one unit particle and/or a quasi-single particle form formed by agglomeration of 30 or less unit particles, intergranular cracks in the lithium transition metal oxide can be reduced. By reducing the intergranular cracks in the lithium transition metal oxide, it is possible to improve lifetime and stability of a lithium secondary battery using the lithium transition metal oxide as a positive electrode active material.

In addition, according to the present invention, by suppressing and/or mitigating the formation of cracks in the unit particles, resistance to strain caused by volume contraction and expansion of the unit particles during repeated charge and discharge cycles can be improved, thereby providing an advantage that a lithium secondary battery using the lithium transition metal oxide as a positive electrode active material can exhibit long-term stable electrochemical characteristics.

### BRIEF DESCRIPTION OF THE DRAWINGS

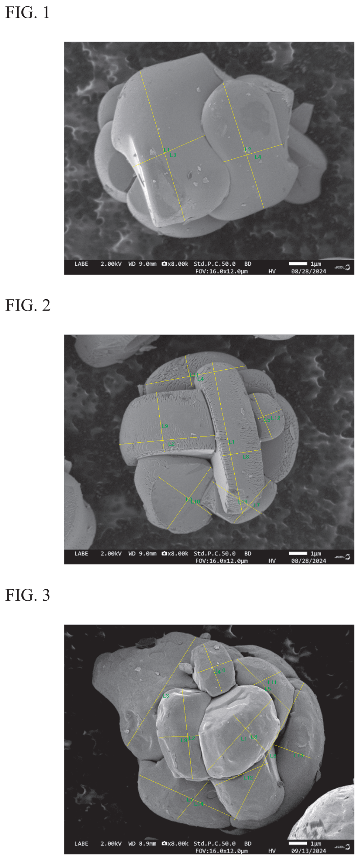

FIG. 1 is a surface SEM image of a positive electrode active material (lithium transition metal oxide) according to Example 1.
FIG. 2 is a surface SEM image of a positive electrode active material (lithium transition metal oxide) according to Example 2.
FIG. 3 is a surface SEM image of a positive electrode active material (lithium transition metal oxide) according to Example 3.

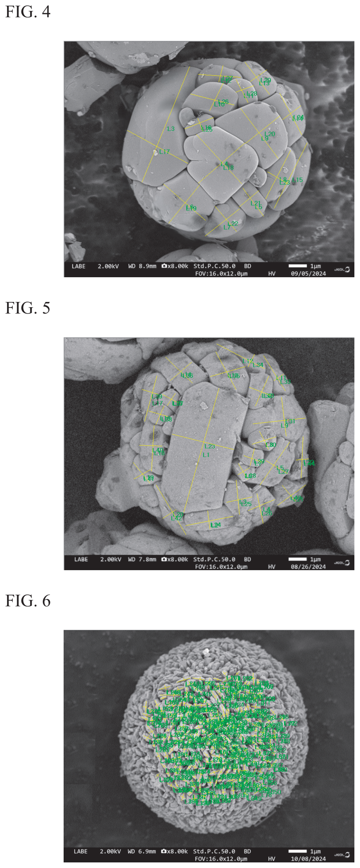

FIG. 4 is a surface SEM image of a positive electrode active material (lithium transition metal oxide) according to Example 4.
FIG. 5 is a surface SEM image of a positive electrode active material (lithium transition metal oxide) according to Example 5.
FIG. 6 is a surface SEM image of a positive electrode active material (lithium transition metal oxide) according to Comparative Example 1.

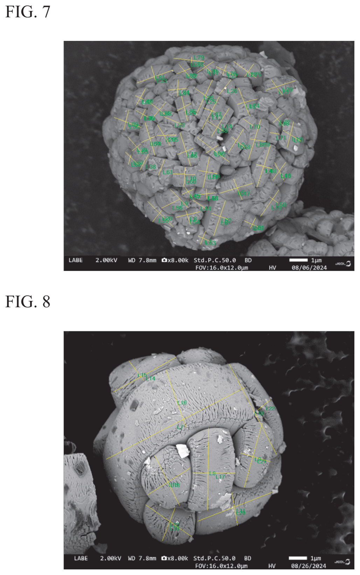

FIG. 7 is a surface SEM image of a positive electrode active material (lithium transition metal oxide) according to Comparative Example 2.
FIG. 8 is a surface SEM image of a positive electrode active material (lithium transition metal oxide) according to Comparative Example 3.

### DETAILED DESCRIPTION OF EXEMPLARY EMBODIMENTS

To better understand the present invention, certain terms are defined herein for convenience. Unless otherwise defined herein, scientific and technical terms used herein will have meanings generally understood by those of ordinary skill in the art. In addition, unless the context clearly indicates otherwise, it should be understood that a term in the singular form also includes its plural form, and a term in the plural form also includes its singular form.

### Positive electrode active material

According to one aspect of the present invention, the positive electrode active material comprises a lithium transition metal oxide capable of reversible intercalation/deintercalation of lithium ions. The lithium transition metal oxide refers to an oxide in which lithium and at least one transition metal are composite.

The positive electrode active material according to the present invention comprises a lithium transition metal oxide in the form of a single particle composed of one unit particle and/or a quasi-single particle formed by agglomeration of 30 or less unit particles. The present invention provides a positive electrode active material that enables a lithium secondary battery using the positive electrode active material to exhibit long-term stable electrochemical characteristics by reducing cracks present in the positive electrode active material.

The lithium transition metal oxide may have intergranular cracks, intragranular cracks, and/or surface cracks.

The intergranular crack refers to a crack formed at grain boundaries between adjacent unit particles (primary particles) when the lithium transition metal oxide is present in a secondary particle form such as a quasi-single particle form. The intergranular crack may occur as strain caused by random volume contraction and expansion of the unit particles constituting the secondary particle during charge and discharge is accumulated. The positive electrode active material according to the present invention can suppress and/or mitigate intergranular cracks by reducing the number of unit particles constituting the lithium transition metal oxide.

The intragranular crack refers to a crack formed inside a unit particle constituting the lithium transition metal oxide. The intragranular crack refers to an isolated crack inside the unit particle, and the intragranular crack formed inside the unit particle can be observed from a cross-sectional SEM image of the lithium transition metal oxide.

The surface crack refers to a crack formed on the surface of the unit particle. In particular, the surface crack may increase in occurrence as growth of the unit particle is induced. The surface crack formed on the surface of the unit particle can be observed from a surface SEM image of the lithium transition metal oxide.

The growth of primary particles, which are unit particles constituting the lithium transition metal oxide, may suppress and/or mitigate intergranular cracks as the number of unit particles constituting the lithium transition metal oxide is reduced, but as the unit particles become larger, intragranular cracks and surface cracks in the unit particles are inevitably generated. Accordingly, the positive electrode active material according to the present invention is characterized in that long-term stability of the positive electrode active material is improved by suppressing and/or mitigating the formation of cracks in the unit particles constituting the lithium transition metal oxide. In particular, the positive electrode active material according to the present invention can improve lifetime and stability of a lithium secondary battery using the lithium transition metal oxide as a positive electrode active material by reducing surface cracks observed from a surface SEM image of the lithium transition metal oxide.

The lithium transition metal oxide is a composite metal oxide capable of intercalation/deintercalation of lithium ions and has a layered crystal structure belonging to the R-3m space group. The lithium transition metal oxide having the layered crystal structure exhibits a characteristic peak in a region of 2θ of 18° to 20° among diffraction patterns obtained from XRD analysis.

The lithium transition metal oxide comprises lithium and a transition metal. The transition metal may comprise at least one selected from nickel, cobalt, and manganese. The lithium transition metal oxide may further comprise aluminum.

Preferably, the lithium transition metal oxide may be a lithium nickel-based transition metal composite oxide comprising nickel. In order to improve low rate characteristics and lifetime characteristics while maintaining a high reversible capacity of LiNiO₂, the lithium nickel-based composite oxide may be a lithium transition metal oxide of a ternary type such as so-called NCM (Ni-Co-Mn) and NCA (Ni-Co-Al), in which a part of nickel is substituted with cobalt, manganese, and/or aluminum, or a quaternary type such as NCMA (Ni-Co-Mn-Al). As still another example, the lithium nickel-based transition metal composite oxide may be a lithium transition metal oxide of a so-called cobalt-free type that does not include cobalt.

The lithium transition metal oxide may be in a single particle form composed of one unit particle and/or a quasi-single particle form formed by agglomeration of 30 or less unit particles. That is, the lithium transition metal oxide may be composed of a single particle or may be present as a secondary particle in which a plurality of single particles are agglomerated.

Herein, the quasi-single particle refers to a secondary particle in which a relatively small number of unit particles are agglomerated, and the quasi-single particle may be a secondary particle formed by agglomeration of 5 or less, 10 or less, 20 or less, or 30 or less unit particles. When the lithium transition metal oxide has a secondary particle form in which more than 30 unit particles are agglomerated, the lithium transition metal oxide may be referred to as a multi-particle form.

In addition, a number of unit particles observed from a surface SEM image of the lithium transition metal oxide present in the quasi-single particle form may be 20 or less, 18 or less, or 15 or less. When a number of unit particles observed from a surface SEM image of the lithium transition metal oxide present in the quasi-single particle form is more than 30, the lithium transition metal oxide may be referred to as a multi-particle form. The above-described multi-particle form of the lithium transition metal oxide may have difficulty sufficiently mitigating intergranular cracks in the lithium transition metal oxide.

A plurality of single particles constituting the secondary particle are each referred to as a primary particle or a unit particle, and the secondary particle may be referred to as a bulk or a bulk particle.

When the lithium transition metal oxide in a single particle form is referred to as a non-agglomerate and the lithium transition metal oxide in a secondary particle form is referred to as an agglomerate, the positive electrode active material may comprise the agglomerate and/or the non-agglomerate. For example, the positive electrode active material may comprise only the lithium transition metal oxide that is the non-agglomerate, or may comprise only the lithium transition metal oxide that is the agglomerate. In addition, the positive electrode active material may be present as an aggregate in which the lithium transition metal oxide that is the non-agglomerate and the lithium transition metal oxide that is the agglomerate are mixed.

For convenience, herein, the unit particle, the single particle, the primary particle, and the secondary particle may all be referred to as the lithium transition metal oxide, and since the single particle and the primary particle are both individual particles, they will hereinafter all be referred to as primary particles.

The primary particle may have a rod shape, an oval shape, and/or an irregular shape. In addition, unless specifically intended in the manufacturing process, various shapes of primary particles may exist in the same positive electrode active material. In addition, the primary particle refers to a particle unit in which no grain boundary is apparently present when observed at a magnification of 5,000 times to 20,000 times using a scanning electron microscope.

In addition, the primary particle may mean one grain or crystallite. The unit particle and/or the primary particle may have a single crystal structure including a single crystallite or may have a polycrystalline structure including a plurality of crystallites.

When the lithium transition metal oxide is present in a single particle form, an average particle diameter (D₅₀) of the single particle may be 2.0 µm or more and 10.0 µm or less. When the average particle diameter (D₅₀) of the single particle is less than 2.0 µm, an energy density of the positive electrode active material may be reduced. On the other hand, when growth of the single particle is excessively induced such that the average particle diameter (D₅₀) of the single particle becomes greater than 10.0 µm, it may be difficult to effectively control cracks in the single particle.

An average particle diameter (D₅₀) of the quasi-single particle present in the quasi-single particle form of the lithium transition metal oxide may be 3.0 µm to 20.0 µm, 4.0 µm to 18.0 µm, 6.0 µm to 16.0 µm, or 5.0 µm to 15.0 µm. When the average particle diameter (D₅₀) of the quasi-single particle is less than 3.0 µm, an energy density of the positive electrode active material may be reduced. On the other hand, when growth of the unit particle is excessively induced such that the average particle diameter (D₅₀) of the quasi-single particle becomes greater than 20.0 µm, there is a concern that an occurrence frequency of cracks in the quasi-single particle may increase.

The average particle diameter (D₅₀) of the single particle and the quasi-single particle may be measured using a laser diffraction method. For example, after dispersing a positive electrode active material comprising the single particle and the quasi-single particle in a dispersion medium, the dispersion may be introduced into a commercially available laser diffraction particle size analyzer (for example, Microtrac MT 3000), and then an ultrasonic wave of about 28 kHz may be irradiated at an output of 60 W. After that, a volume cumulative particle size distribution graph may be obtained, and the particle size corresponding to 50% of the volume cumulative amount may be determined, thereby measuring the average particle diameter.

A surface shape of the unit particle observed from a surface SEM image of the lithium transition metal oxide has a major axis and a minor axis, and an average value of a length of the major axis of the unit particle may be 2.0 µm or more and 10.0 µm or less, 2.0 µm or more and 9.0 µm or less, or 2.0 µm or more and 8.5 µm or less. In addition, an average value of a length of the minor axis of the unit particle observed from a surface SEM image of the lithium transition metal oxide may be 1.0 µm or more and less than 10.0 µm, 1.0 µm or more and 9.0 µm or less, 1.0 µm or more and 8.0 µm or less, 1.0 µm or more and 7.0 µm or less, 1.0 µm or more and 6.0 µm or less, or 1.0 µm or more and 5.0 µm or less.

When growth of the unit particles constituting the lithium transition metal oxide is sufficiently induced, the unit particles may have a major axis length and a minor axis length within the above-described ranges. When the unit particles do not satisfy the above-described major axis length and/or minor axis length, it may be difficult to sufficiently mitigate intergranular cracks in the lithium transition metal oxide and/or intragranular cracks and surface cracks in the unit particles.

As described above, the lithium transition metal oxide is a composite metal oxide having a layered crystal structure belonging to the R-3m space group. Therefore, the unit particles also have a layered crystal structure belonging to the R-3m space group.

The layered crystal structure belonging to the R-3m space group represents a crystal structure in which a lithium layer containing lithium and a transition metal layer containing a transition metal are alternately arranged. As the content of nickel in the lithium transition metal oxide increases, a change in the crystal structure may occur in some regions of the lithium transition metal oxide due to cation mixing (Li↔Ni) between the lithium layer and the transition metal layer. In particular, when growth of the unit particles is induced through high-temperature sintering, a change in the crystal structure may occur on the surface of the unit particles exposed to the outside.

When the above-described cation mixing occurs on the surface of the unit particles, a rock-salt phase region including a rock-salt crystal structure belonging to the Fm-3m space group may be formed on at least a portion of the surface of the unit particles. Since the rock-salt phase acts as an impurity phase in the layered crystal structure, cracks are likely to occur in portions where the rock-salt phase region is formed. However, cracks in the unit particles do not necessarily occur only in the rock-salt phase region and may also occur in the layered region structurally damaged by high-temperature sintering.

For example, when a half radius of the unit particle measured from a cross-sectional SEM image of the unit particle is defined as r, cracks in a surface portion where a distance (d) from a center of the unit particle satisfies (2/3)r < d may be more than cracks in a central portion where a distance (d) from the center of the unit particle satisfies 0 ≤ d ≤ (2/3)r. Cracks in the surface portion and cracks in the central portion may be compared as areas of cracks observed in the cross-sectional SEM image of the unit particle.

According to the present invention, a ratio (a1/a) of a total area (a1) of cracks present on a surface of the unit particle relative to a surface area (a) of the unit particle observed from a surface SEM image of the lithium transition metal oxide may be 10% or less, 9% or less, 8% or less, 7.5% or less, or 7.2% or less. When the ratio (a1/a) of the total area (a1) of cracks present on the surface of the unit particle relative to the surface area (a) of the unit particle exceeds 10%, resistance to strain caused by random volume contraction and expansion of the primary particles during repeated charge and discharge cycles may be rapidly weakened, and long-term stability of the positive electrode active material may be rapidly degraded.

In addition, cracks may not be present on a surface of the unit particle observed from a surface SEM image of the lithium transition metal oxide. In this case, a ratio (a1/a) of a total area (a1) of cracks present in the unit particle relative to a surface area (a) of the unit particle observed from the surface SEM image of the lithium transition metal oxide is 0%.

A ratio (a1/a) of a total area (a1) of cracks present on a surface of the unit particle relative to a surface area (a) of the unit particle observed from a surface SEM image of the lithium transition metal oxide may be calculated as an average value of calculation results for all unit particles observed from the surface SEM image of the lithium transition metal oxide, after quantifying the surface area (a) of the unit particle and the total area (a1) of the cracks using an image analysis program based on digital transformation with respect to the surface SEM image of the lithium transition metal oxide. In addition, the ratio (a1/a) of the total area (a1) of cracks present on the surface of the unit particle relative to the surface area (a) of the unit particle observed from the surface SEM image of the lithium transition metal oxide may be defined as a ratio (A1/A) of an average value (A1) of the total areas of cracks present on the surface of the individual unit particles observed from the surface SEM image of the lithium transition metal oxide relative to an average value (A) of the surface areas of the individual unit particles observed from the surface SEM image of the lithium transition metal oxide.

A surface shape of the unit particle constituting the lithium transition metal oxide may not necessarily be circular, and for example, may have a rod shape, an oval shape, and/or an irregular shape. Therefore, a ratio of the cracks present on the surface of the individual unit particle observed from the surface SEM image may vary depending on a location where the surface of the individual unit particle is exposed.

When a length of a major axis measured from a surface shape of the unit particle observed from a surface SEM image of the lithium transition metal oxide is defined as r1, a ratio (a2/a) of a total area (a2) of intragranular cracks present in a region where a distance (d1) from an outermost part of the surface shape of the unit particle is d1 ≤ (1/4)r1 relative to a total surface area (a) of the unit particle observed from the surface SEM image of the lithium transition metal oxide may be 5% or less.

When a length of a minor axis measured from a surface shape of the unit particle observed from a surface SEM image of the lithium transition metal oxide is defined as r2, a ratio (a3/a) of a total area (a3) of intragranular cracks present in a region where a distance (d2) from an outermost part of the surface shape of the unit particle is d2 ≤ (1/3)r2 relative to a total surface area (a) of the unit particle observed from the surface SEM image of the lithium transition metal oxide may be 9% or less.

Herein, the lithium transition metal oxide comprises lithium and a transition metal, and a content of nickel among the transition metals may be 50 mol% or more, 60 mol% or more, 70 mol% or more, 80 mol% or more, or 90 mol% or more. In addition, a content of nickel among the transition metals may be 99 mol% or less, 95 mol% or less, or 90 mol% or less.

The lithium transition metal oxide is represented by Chemical Formula 1 below:

[Chemical Formula 1] LiₐNi_{1-(b+c+d+e)}Co_{b}Mn_{c}M1_{d}M2ₑO₂

wherein, in Chemical Formula 1,
M1 is at least one selected from Na, K, Mg, Ca, Sr, Ba, and Rb,
M2 is at least one selected from B, Ce, Hf, Ta, Cr, F, Al, V, Ti, Fe, Zr, Zn, Si, Y, Nb, Ga, Sn, Mo, W, P, Ge, Nd, Gd, and Cu,
0.85≤a≤1.15, 0≤b≤0.20, 0≤c≤0.20, 0.001≤d≤0.05, 0≤e≤0.10, and 0.5≤1-(b+c+d+e)<1.0.

In Chemical Formula 1, "a", which represents a ratio of lithium to total elements other than lithium in the lithium transition metal oxide, may be 0.85 or more and 1.15 or less, 0.85 or more and 1.10 or less, 0.90 or more and 1.15 or less, or 0.90 or more and 1.04 or less.

When a in Chemical Formula 1 is less than 0.85, a capacity of the positive electrode active material comprising the lithium transition metal oxide represented by Chemical Formula 1 may be reduced. On the other hand, when a in Chemical Formula 1 is greater than 1.15, phase separation may be caused by lithium and manganese present in excess in the lithium transition metal oxide, and an impurity phase belonging to a space group other than the R-3m space group may occur.

In Chemical Formula 1, "1-(b+c+d+e)," which represents a mole fraction of nickel relative to total elements other than lithium in the lithium transition metal oxide, may be 0.50 or more, 0.60 or more, 0.70 or more, 0.80 or more, or 0.90 or more.

An upper limit and a lower limit of the mole fraction of nickel relative to total elements other than lithium in the lithium transition metal oxide may be appropriately selected within a range satisfying the above definition. When the mole fraction of nickel in the lithium transition metal oxide satisfies the above range, a stable crystal structure may be formed and a high energy density may be exhibited.

In Chemical Formula 1, "b", which represents a mole fraction of cobalt relative to total elements other than lithium in the lithium transition metal oxide, may be 0.20 or less, 0.15 or less, 0.10 or less, or 0.05 or less. When the lithium transition metal oxide comprises cobalt, b in Chemical Formula 1 is greater than 0. When the mole fraction of cobalt in the lithium transition metal oxide satisfies the above range, a stable crystal structure may be formed and favorable output characteristics may be exhibited.

In Chemical Formula 1, "c", which represents a mole fraction of manganese relative to total elements other than lithium in the lithium transition metal oxide, may be 0.20 or less, 0.15 or less, 0.10 or less, or 0.05 or less. When the lithium transition metal oxide comprises manganese, c in Chemical Formula 1 is greater than 0. When the mole fraction of manganese in the lithium transition metal oxide satisfies the above range, a stable crystal structure may be formed.

By mixing a precursor of the lithium transition metal oxide with a raw material comprising at least one selected from alkali metals and alkaline earth metals and then sintering, growth of unit particles can be induced while suppressing and/or alleviating formation of intragranular cracks in the unit particles. When the precursor of the lithium transition metal oxide is mixed with a raw material comprising at least one selected from alkali metals and alkaline earth metals and then sintered, the alkali metal and/or alkaline earth metal may be doped into the lithium transition metal oxide.

In Chemical Formula 1, M1 refers to alkali metals and alkaline earth metals doped into the lithium transition metal oxide, and M1 may be at least one selected from Na, K, Mg, Ca, Sr, Ba, and Rb; at least one selected from K, Ca, Sr, Ba, and Rb; at least one selected from K, Sr, Ba, and Rb; or at least one selected from K, Sr, and Ba.

The content of alkali metals and alkaline earth metals, excluding lithium, relative to total elements in the lithium transition metal oxide may be 0.1 mol% or more to 5.0 mol% or less, 0.5 mol% or more to 4.0 mol% or less, or 1.0 mol% or more to 3.0 mol% or less.

In Chemical Formula 1, M2 refers to dopants other than alkali metals and alkaline earth metals present in the lithium transition metal oxide. The dopant may be present in a state doped into the crystal lattice of the unit particle. In addition, by including the dopant, the electrochemical characteristics of the positive electrode active material may be improved.

When the lithium transition metal oxide comprises a dopant, "e" in Chemical Formula 1 is greater than 0. In addition, when the lithium transition metal oxide comprises a dopant, e, which represents a mole fraction of the dopant relative to total elements other than lithium in the lithium transition metal oxide, may be 0.10 or less, 0.05 or less, 0.04 or less, 0.03 or less, 0.02 or less, or 0.01 or less.

When the lithium transition metal oxide selectively comprises a dopant, the dopant may comprise at least one selected from B, Ce, Hf, Ta, Cr, F, Al, V, Ti, Fe, Zr, Zn, Si, Y, Nb, Ga, Sn, Mo, W, P, Ge, Nd, Gd, and Cu. A type, combination, and content of the dopant may be appropriately selected within a range not adversely affecting electrochemical characteristics and stability of the positive electrode active material.

### Lithium secondary battery

According to another aspect of the present invention, there is provided a positive electrode including a positive electrode current collector and a positive electrode active material layer formed on the positive electrode current collector. The positive electrode active material layer may include the positive electrode active material according to various embodiments of the present invention. Since the positive electrode active material is the same as described above, for convenience, a detailed explanation will be omitted, and only the components that have not been described will be described below.

The positive electrode current collector is not particularly limited as long as it does not cause a chemical change in a battery and has conductivity, and for example, stainless steel, aluminum, nickel, titanium, calcined carbon, or aluminum or stainless steel whose surface is treated with carbon, nickel, titanium or silver may be used. In addition, the positive electrode current collector may generally have a thickness of 3 µm to 500 µm, and fine irregularities may be formed on the surface of the current collector, thereby increasing the adhesion of a positive electrode active material. For example, the positive electrode current collector may be used in various forms such as a film, a sheet, a foil, a net, a porous body, a foam, a non-woven fabric, etc.

The positive electrode active material layer may be prepared by coating the positive electrode current collector with a positive electrode slurry composition including the positive electrode active material, a conductive material, and optionally a binder.

The positive electrode active material may be included in an amount of 80 wt% to 99 wt%, specifically 85 wt% to 98.5 wt%, with respect to the total weight of the positive electrode active material layer. When the positive electrode active material is included in this content range, excellent capacity characteristics may be exhibited, but the present invention is not necessarily limited thereto.

The conductive material is used to impart conductivity to an electrode, and is not particularly limited as long as it has electron conductivity without causing a chemical change in a battery. Specific examples of the conductive material may include graphite such as natural graphite or artificial graphite; a carbon-based material such as carbon black, acetylene black, Ketjen black, channel black, furnace black, lamp black, thermal black or a carbon fiber; a metal powder or metal fiber consisting of copper, nickel, aluminum, or silver; a conductive whisker consisting of zinc oxide or potassium titanate; a conductive metal oxide such as titanium oxide; or a conductive polymer such as a polyphenylene derivative, and one or a mixture of two or more thereof may be used. The conductive material may be included in an amount of 0.1 wt% to 15 wt% with respect to the total weight of the positive electrode active material layer.

The binder serves to improve the adhesion between particles of the positive electrode active material and the adhesion between the positive electrode active material and a current collector. Specific examples of the binder may include polyvinylidene fluoride (PVDF), a vinylidene fluoride-hexafluoropropylene copolymer (PVDF-co-HFP), polyvinyl alcohol, polyacrylonitrile, carboxymethylcellulose (CMC), starch, hydroxypropyl cellulose, regenerated cellulose, polyvinylpyrrolidone, tetrafluoroethylene, polyethylene, polypropylene, an ethylenepropylene-diene polymer (EPDM), a sulfonated EPDM, styrene butadiene rubber (SBR), a fluoroelastomer, or various copolymers thereof, and one or a mixture of two or more thereof may be used. The binder may be included in an amount of 0.1 wt% to 15 wt% with respect to the total weight of the positive electrode active material layer.

The positive electrode may be manufactured according to a conventional method of manufacturing a positive electrode, except that the above-described positive electrode active material is used. Specifically, the positive electrode may be manufactured by coating the positive electrode current collector with a positive electrode slurry composition prepared by dissolving or dispersing the positive electrode active material, and optionally, a binder and a conductive material in a solvent, and drying and rolling the resulting product.

The solvent may be a solvent generally used in the art, and may be dimethyl sulfoxide (DMSO), isopropyl alcohol, N-methylpyrrolidone (NMP), acetone or water, and one or a mixture of two or more thereof may be used. In consideration of the coating thickness and production yield of a slurry, the solvent is used at a sufficient amount for dissolving or dispersing the positive electrode active material, the conductive material, and the binder and then imparting a viscosity for exhibiting excellent thickness uniformity when the slurry is applied to manufacture a positive electrode.

In addition, in another embodiment, the positive electrode may be manufactured by casting the positive electrode slurry composition onto a separate support, and then laminating a film obtained by delamination from the support onto the positive electrode current collector.

Moreover, still another aspect of the present invention provides an electrochemical device including the above-described positive electrode. The electrochemical device may be, specifically, a battery, a capacitor, and more specifically, a lithium secondary battery.

The lithium secondary battery may specifically include a positive electrode, a negative electrode disposed opposite to the positive electrode, and a separator, which is interposed between the positive electrode and the negative electrode, and an electrolyte. Since the positive electrode is the same as described above, detailed description of the positive electrode will be omitted for convenience, and other components which have not been described above will be described in detail below.

The lithium secondary battery may further optionally include a battery case accommodating an electrode assembly of the positive electrode, the negative electrode and the separator, and a sealing member for sealing the battery case.

The negative electrode may include a negative electrode current collector and a negative electrode active material layer disposed on the negative electrode current collector.

The negative electrode current collector is not particularly limited as long as it has high conductivity without causing a chemical change in a battery, and may be, for example, copper, stainless steel, aluminum, nickel, titanium, calcined carbon, or copper or stainless steel whose surface is treated with carbon, nickel, titanium or silver, or an aluminum-cadmium alloy. In addition, the negative electrode current collector may generally have a thickness of 3 µm to 500 µm, and like the positive electrode current collector, fine irregularities may be formed on the current collector surface, thereby enhancing the binding strength of the negative electrode active material. For example, the negative electrode current collector may be used in various forms such as a film, a sheet, a foil, a net, a porous body, a foam, a non-woven fabric, etc.

The negative electrode active material layer may be formed by coating the negative electrode current collector with a negative electrode slurry composition including the negative electrode active material, a conductive material, and optionally a binder.

As the negative electrode active material, a compound capable of the reversible intercalation/deintercalation of lithium may be used. Specific examples of the negative electrode active material may include a carbonaceous material such as artificial graphite, natural graphite, graphitized carbon fiber or amorphous carbon; a metallic compound capable of alloying with lithium, such as Si, Al, Sn, Pb, Zn, Bi, In, Mg, Ga, Cd, a Si alloy, a Sn alloy or an Al alloy; a metal oxide capable of doping and dedoping lithium such as SiO_{β} (0<β<2), SnO₂, vanadium oxide, or lithium vanadium oxide; or a composite including the metallic compound and the carbonaceous material such as a Si-C composite or a Sn-C composite, and any one or a mixture of two or more thereof may be used. As the negative electrode active material, a metal lithium thin film may be used. In addition, as a carbon material, both low-crystalline carbon and high-crystalline carbon may be used. Representative examples of the low-crystalline carbon include soft carbon and hard carbon, and representative examples of the high-crystalline carbon include amorphous, plate-like, flaky, spherical or fiber-like natural or artificial graphite, Kish graphite, pyrolytic carbon, mesophase pitch-based carbon fiber, meso-carbon microbeads, mesophase pitches, and high-temperature calcined carbon such as petroleum or coal tar pitch derived cokes.

The negative electrode active material may be included in an amount of 80 wt% to 99 wt% with respect to the total weight of the negative electrode active material layer.

The binder is a component that assists in the bonding between a conductive material, an active material, and a current collector, and may typically be added in an amount of 0.1 wt% to 10 wt% with respect to the total weight of the negative electrode active material layer. Examples of the binder may include polyvinylidene fluoride (PVDF), polyvinyl alcohol, carboxymethylcellulose (CMC), starch, hydroxypropylcellulose, regenerated cellulose, polyvinylpyrrolidone, tetrafluoroethylene, polyethylene, polypropylene, an ethylene-propylene-diene polymer (EPDM), a sulfonated-EPDM, styrene-butadiene rubber, nitrile-butadiene rubber, a fluoroelastomer, and various copolymers thereof.

The conductive material is a component for further improving the conductivity of the negative electrode active material, and may be added in an amount of 10 wt% or less, preferably, 5 wt% or less, with respect to the total weight of the negative electrode active material layer. The conductive material is not particularly limited as long as it does not cause a chemical change in the battery and has conductivity, and may be, for example, graphite such as natural graphite or artificial graphite; carbon black such as acetylene black, Ketjen black, channel black, furnace black, lamp black, or thermal black; a conductive fiber such as a carbon fiber or a metal fiber; a metal powder such as fluorinated carbon, aluminum, or nickel powder; a conductive whisker consisting of zinc oxide or potassium titanate; a conductive metal oxide such as titanium oxide; or a conductive material such as a polyphenylene derivative.

In an embodiment, the negative electrode active material layer may be prepared by coating the negative electrode current collector with a negative electrode slurry composition prepared by dissolving or dispersing a negative electrode active material, and optionally, a binder and a conductive material in a solvent, and then drying, or may be prepared by casting the negative electrode slurry composition on a separate support and then laminating a film delaminated from the support on the negative electrode current collector.

Meanwhile, in the lithium secondary battery, the separator separates the negative electrode and the positive electrode and provides a passage for lithium ions to move, and is not particularly limited as long as it is commonly used as a separator in lithium secondary batteries. In particular, it is preferable that the separator has low resistance to ion transfer of the electrolyte and excellent electrolyte impregnation ability. Specifically, a porous polymer film, such as a porous polymer film made of a polyolefin-based polymer such as an ethylene homopolymer, a propylene homopolymer, an ethylene/butene copolymer, an ethylene/hexene copolymer, and an ethylene/methacrylate copolymer, or a stacked structure including two or more layers thereof may be used. In addition, a conventional porous non-woven fabric, such as a non-woven fabric made of high melting point glass fiber or polyethylene terephthalate fiber, may be used. In addition, a coated separator including a ceramic component or a polymer material may be used to ensure thermal resistance or mechanical strength, and may be optionally used in a single- or multi-layered structure.

In addition, the electrolyte used herein may be an organic liquid electrolyte, an inorganic liquid electrolyte, a solid polymer electrolyte, a gel-type polymer electrolyte, a solid inorganic electrolyte, or a molten-type inorganic electrolyte, which is able to be used in manufacturing lithium secondary batteries, but the present invention is not limited thereto.

Specifically, the electrolyte may include an organic solvent and a lithium salt.

The organic solvent is not particularly limited as long as it can serve as a medium enabling the movement of ions involved in an electrochemical reaction of a battery. Specifically, the organic solvent may be an ester-based solvent such as methyl acetate, ethyl acetate, γ-butyrolactone, or ε-caprolactone; an ether-based solvent such as dibutyl ether or tetrahydrofuran; a ketone-based solvent such as cyclohexanone; an aromatic hydrocarbon-based solvent such as benzene or fluorobenzene; a carbonate-based solvent such as dimethyl carbonate (DMC), diethyl carbonate (DEC), methyl ethyl carbonate (MEC), ethyl methyl carbonate (EMC), ethylene carbonate (EC), or propylene carbonate (PC); an alcohol-based solvent such as ethyl alcohol or isopropyl alcohol; a nitrile-based solvent such as R-CN (R is a linear, branched or cyclic C₂ to C₂₀ hydrocarbon group, and may include a double bonded aromatic ring or an ether bond); an amide-based solvent such as dimethylformamide; a dioxolane-based solvent such as 1,3-dioxolane; or a sulfolane-based solvent. Among these, a carbonate-based solvent is preferred, and a mixture of a cyclic carbonate (such as ethylene carbonate or propylene carbonate), which has high ionic conductivity and a high dielectric constant that can improve the charging/discharging performance of the battery and a low-viscosity linear carbonate-based compound (such as ethyl methyl carbonate, dimethyl carbonate, or diethyl carbonate) is more preferred. In this case, it is preferable to use a mixture of cyclic carbonate and chain-type carbonate at a volume ratio of about 1:1 to about 1:9, which can result in excellent electrolyte performance.

The lithium salt is not particularly limited as long as it is a compound capable of providing lithium ions used in a lithium secondary battery. Specifically, the lithium salt may be LiPF₆, LiClO₄, LiAsF₆, LiBF₄, LiSbF₆, LiAlO₄, LiAlCl₄, LiCF₃SO₃, LiC₄F₉SO₃, LiN(C₂F₅SO₃)₂, LiN(C₂F₅SO₂)₂, LiN(CF₃SO₂)₂, LiCl, LiI, or LiB(C₂O₄)₂. The concentration of the lithium salt is preferably in the range of 0.1 M to 2.0 M. When the concentration of the lithium salt is within this range, the electrolyte has appropriate conductivity and viscosity, exhibiting excellent electrolyte performance, and thus lithium ions may move effectively.

When the electrolyte used herein is a solid electrolyte, for example, a solid inorganic electrolyte such as a sulfide-based solid electrolyte, an oxide-based solid electrolyte, a nitridebased solid electrolyte, or a halide-based solid electrolyte may be used, and preferably, a sulfide-based solid electrolyte may be used.

As a material for the sulfide-based solid electrolyte, a solid electrolyte containing Li, an X element (where X is at least one selected from P, As, Sb, Si, Ge, Sn, B, Al, Ga, and In) and S may be used. Examples of the sulfide-based solid electrolyte material may include Li₂S-P₂S₅, Li₂S-P₂S-LiX (where X is a halogen element such as I or Cl), Li₂S-P₂S₅-Li₂O, Li₂S-P₂S₅-Li₂O-LiI, Li₂S-SiS₂, Li₂S-SiS₂-LiI, Li₂S-SiS₂-LiBr, Li₂S-SiS₂-LiCl, Li₂S-SiS₂-B₂S₃-LiI, Li₂S-SiS₂-P₂S₅-LiI, Li₂S-B₂S₃, Li₂S-P₂S₅-ZₘSₙ (where m and n are integers, and Z is Ge, Zn, or Ga), Li₂S-GeS₂, Li₂S-SiS₂-Li₃PO₄, and Li₂S-SiS₂-LiₚMO_{q} (where p and q are integers, and M is P, Si, Ge, B, Al, Ga, or In).

The solid electrolyte, preferably, the sulfide-based solid electrolyte, may be amorphous, crystalline, or in a state in which an amorphous phase and crystalline phase are mixed.

Materials for the oxide-based solid electrolyte include Li₇La₃Zr₂O₁₂, Li₇₋ₓLa₃Zr₁₋ₓNbₓO₁₂, Li₇₋₃ₓLa₃Zr₂AlₓO₁₂, Li₃ₓLa_{2/3-x}TiO₃, Li₁₊ₓAlₓTi₂₋ₓ(PO₄)₃, Li₁₊ₓAlₓGe₂₋ₓ(PO₄)₃, Li₃PO₄, Li₃₊ₓPO₄₋ₓNₓ (LiPON), and Li₂₊₂ₓZn₁₋ₓGeO₄ (LISICON).

The above-described solid electrolyte may be disposed as a separate layer (solid electrolyte layer) between the positive and negative electrodes. In addition, the solid electrolyte may be partially included in the positive electrode active material layer of the positive electrode independent of the solid electrolyte layer, or the solid electrolyte may be partially included in the negative electrode active material layer of the negative electrode independent of the solid electrolyte layer.

To enhance the lifetime characteristics of the battery, inhibit a decrease in battery capacity, and enhance the discharge capacity of the battery, the electrolyte may further include one or more types of additives, for example, a haloalkylene carbonate-based compound such as difluoroethylene carbonate, pyridine, triethylphosphite, triethanolamine, cyclic ether, ethylene diamine, n-glyme, hexaphosphoric triamide, a nitrobenzene derivative, sulfur, a quinone imine dye, N-substituted oxazolidinone, N,N-substituted imidazolidine, ethylene glycol dialkyl ether, an ammonium salt, pyrrole, 2-methoxy ethanol or aluminum trichloride, in addition to the components of the electrolyte. The additive may be included in an amount of 0.1 wt% to 5 wt% with respect to the total weight of the electrolyte.

Since the lithium secondary battery including the positive electrode active material according to the present invention stably exhibits excellent discharge capacity, output characteristics, and lifetime characteristics, it is useful in portable devices such as mobile phones, laptop computers, and digital cameras and electric vehicles such as hybrid electric vehicles (HEVs).

The outer shape of the lithium secondary battery according to the present invention is not particularly limited, and may be a cylindrical, prismatic, pouch or coin shape using a can. In addition, the lithium secondary battery may be used not only in battery cells used as a power source of small devices, but also preferably used as a unit battery in medium and large-sized battery modules including a plurality of battery cells.

According to yet another aspect of the present invention, there is provided a battery module including the lithium secondary battery as a unit cell and/or a battery pack including the same.

The battery module or the battery pack may be used as a power source for any one or more of medium and large-sized devices such as a power tool; an electric vehicle including an electric vehicle (EV), a hybrid electric vehicle, and a plug-in hybrid electric vehicle (PHEV); and a power storage system.

Hereinafter, the present invention will be described in more detail through examples. However, these examples are only for the purpose of illustrating the present invention and should not be construed as limiting the scope of the present invention.

### Preparation Example 1. Preparation of positive electrode active material

### Example 1

A spherical Ni_{0.90}Co_{0.05}Mn_{0.05}(OH)₂ hydroxide precursor was synthesized by a coprecipitation method. Specifically, 50 wt% NaOH and 18 wt% NH₄OH were added to a 1.5 M aqueous solution of mixed transition metal sulfates, in which nickel sulfate, cobalt sulfate, and manganese sulfate were mixed at a molar ratio of 90:5:5, in a 90 L-scale reactor. The pH in the reactor was maintained at 12.0, and the temperature of the reactor was maintained at 45°C, while an inert gas, N2, was introduced into the reactor to prevent oxidation of the prepared precursor. After completion of the reaction, the precursor was separated, washed with deionized water, and dried at 120°C for 10 hours to obtain a Ni_{0.90}Co_{0.05}Mn_{0.05}(OH)₂ hydroxide precursor.

Subsequently, the hydroxide precursor, LiOH (Li/(Ni+Co+Mn) molar ratio = 0.9), and Ba(OH)₂ (weighed such that the molar fraction of Ba relative to total elements in the hydroxide precursor was 0.01 (1 mol%)) were mixed and heat-treated at 850°C for 8 hours to obtain a lithium transition metal oxide.

### Example 2

A positive electrode active material was prepared in the same manner as in Example 1, except that the hydroxide precursor, LiOH (Li/(Ni+Co+Mn) molar ratio = 1.0), and Ba(OH)₂ (weighed such that the molar fraction of Ba relative to total elements in the hydroxide precursor was 0.01 (1 mol%)) were mixed and heat-treated.

### Example 3

A positive electrode active material was prepared in the same manner as in Example 1, except that the hydroxide precursor, LiOH (Li/(Ni+Co+Mn) molar ratio = 1.0), Ba(OH)₂ (weighed such that the molar fraction of Ba relative to total elements in the hydroxide precursor was 0.01 (1 mol%)), and Co(OH)₂ (weighed such that the molar fraction of additionally introduced Co relative to total elements in the hydroxide precursor was 0.02 (2 mol%)) were mixed and heat-treated.

### Example 4

A positive electrode active material was prepared in the same manner as in Example 1, except that the hydroxide precursor, LiOH (Li/(Ni+Co+Mn) molar ratio = 1.04), Ba(OH)₂ (weighed such that the molar fraction of Ba relative to total elements in the hydroxide precursor was 0.01 (1 mol%)), and ZrO₂ (weighed such that the molar fraction of Zr relative to total elements in the hydroxide precursor was 0.01 (1 mol%)) were mixed and heat-treated.

### Example 5

A positive electrode active material was prepared in the same manner as in Example 1, except that the hydroxide precursor, LiOH (Li/(Ni+Co+Mn) molar ratio = 1.04), and KOH (weighed such that the molar fraction of K relative to total elements in the hydroxide precursor was 0.01 (1 mol%)) were mixed and heat-treated.

### Comparative Example 1

A positive electrode active material was prepared in the same manner as in Example 1, except that the hydroxide precursor, LiOH (Li/(Ni+Co+Mn) molar ratio = 1.04), and Ba(OH)₂ (weighed such that the molar fraction of Ba relative to total elements in the hydroxide precursor was 0.01 (1 mol%)) were mixed and heat-treated at 700°C.

### Comparative Example 2

A positive electrode active material was prepared in the same manner as in Example 1, except that Ba(OH)₂ was not used, and the hydroxide precursor and LiOH (Li/(Ni+Co+Mn) molar ratio = 1.04) were mixed and heat-treated at 850°C.

### Comparative Example 3

A positive electrode active material was prepared in the same manner as in Example 1, except that the hydroxide precursor, LiOH (Li/(Ni+Co+Mn) molar ratio = 1.04), and Ba(OH)₂ (weighed such that the molar fraction of Ba relative to total elements in the hydroxide precursor was 0.01 (1 mol%)) were mixed and heat-treated.

### Preparation Example 2. Manufacture of lithium secondary battery (half-cell)

A positive electrode slurry was prepared by dispersing 94 wt% of each positive electrode active material prepared according to Preparation Example 1, 3 wt% of carbon black, and 3 wt% of PVDF binder in 30 g of N-methyl-2-pyrrolidone (NMP). The positive electrode slurry was uniformly applied onto a 15 µm-thick aluminum thin film and vacuum dried at 135 °C to manufacture a positive electrode for a lithium secondary battery.

A half-cell was manufactured using a lithium foil as a counter electrode to the positive electrode, a porous polyethylene membrane (Celgard 2300, thickness: 25 µm) as a separator, and an electrolyte in which LiPF₆ was dissolved at a concentration of 1.15 M in a mixed solvent of ethylene carbonate and ethyl methyl carbonate at a volume ratio of 3:7.

### Experimental Example 1. Surface Analysis of Positive Electrode Active Material

Surface FE-SEM images of each positive electrode active material (lithium transition metal oxide) prepared according to Preparation Example 1 were obtained by photographing with a field-emission scanning electron microscope (FE-SEM, JEOL JSM-IT800SHL) under conditions of an accelerating voltage of 5 kV, an emission current of 10 µA, a working distance of 8 mm, and a BED detector.

Using an image analysis program based on digital transformation, the surface area of individual unit particles and the total area of cracks present on the surface of the individual unit particles observed from the FE-SEM surface images were quantified, and their average values were calculated. Then, a ratio (a1/a) of the average value of the surface area of the individual unit particles observed from the FE-SEM surface images to the average value of the total crack area present on the surface of the individual unit particles observed from the surface SEM images of the lithium transition metal oxide was calculated.

In addition, the total area of surface cracks present in a region within a distance (d1) from the outermost part of the unit particle observed from the FE-SEM surface images, where the distance (d1) is within 1/4 of the major axis length (r1) of the unit particle (d1≤(1/4)r1), and the total area of surface cracks present in a region within a distance (d2) from the outermost part of the unit particle observed from the FE-SEM surface images, where the distance (d2) is within 1/3 of the minor axis length (r2) of the unit particle (d2≤(1/3)r2), were quantified, and their average values were calculated.

Then, a ratio (a2/a) of the average value of the total area of surface cracks present in the region within (d1≤(1/4)r1) relative to the average value of the surface area of the individual unit particles observed from the FE-SEM surface images, and a ratio (a3/a) of the average value of the total area of surface cracks present in the region within (d2≤(1/3)r2) relative to the average value of the surface area of the individual unit particles observed from the FE-SEM surface images, were each calculated.

In addition, the number of total unit particles observed from the FE-SEM surface images, the average value of the major axis lengths of the total unit particles, and the average value of the minor axis lengths of the total unit particles were calculated.

The results of the surface SEM analysis are shown in Table 1 below.

**[Table 1]**

| Classificat ion | Number of Unit Particles (ea) | Average Major Axis Length (µm) | Average Minor Axis Length (µm) | Average Surface Area of Unit Particle (µm²) | Average Surface Crack Area of Unit Particle (µm²) | Surface Crack Ratio (a1/a) (%) | a2/a (%) | a3/a (%) |
|---|---|---|---|---|---|---|---|---|
| Example 1 | 2 | 8.27 | 4.19 | 36.18 | 0 | 0 | 0 | 0 |
| Example 2 | 7 | 5.07 | 2.72 | 11.50 | 0.83 | 7.2 | 4.8 | 5.0 |
| Example 3 | 8 | 5.90 | 2.56 | 11.00 | 0 | 0 | 0 | 0 |
| Example 4 | 14 | 3.00 | 1.86 | 5.47 | 0.04 | 0.7 | 0.4 | 0.5 |
| Example 5 | 22 | 2.31 | 1.29 | 2.72 | 0.1 | 3.7 | 0 | 3.7 |
| Comparati ve Example 1 | 200 | 0.50 | 0.21 | 0.13 | 0 | 0 | 0 | 0 |
| Comparati ve Example 2 | 46 | 1.14 | 0.82 | 1.48 | 0.21 | 14.2 | 5.4 | 12.2 |
| Comparati ve Example 3 | 4 | 4.66 | 2.06 | 8.38 | 0.98 | 11.7 | 5.7 | 9.7 |

### Experimental Example 2. Evaluation of Electrochemical Characteristics of Lithium Secondary Battery (Half-Cell)

For the lithium secondary battery (half-cell) manufactured in Preparation Example 2, charging/discharging was conducted 30 times using an electrochemical analyzer (Toyo, Toscat-3100) at 25 °C, in a voltage range of 2.5 V to 4.25 V, and 0.5C/0.1C to measure a capacity retention which is a ratio of a discharge capacity at a 30th cycle to an initial discharge capacity.

The measurement results are shown in Table 2 below.

**[Table 2]**

| Classification | Retention@30cy (%) |
|---|---|
| Example 1 | 87.5% |
| Example 2 | 85.5% |
| Example 3 | 84.9% |
| Example 4 | 88.1% |
| Example 5 | 88.6% |
| Comparative Example 1 | 81.2% |
| Comparative Example 2 | 78.3% |
| Comparative Example 3 | 78.3% |

Referring to the results of Table 2, it can be confirmed that the lifetime retention of the lithium secondary batteries using the positive electrode active materials according to Examples 1 to 5 is improved compared with the lifetime retention of the lithium secondary battery using the positive electrode active material according to Comparative Example 1, which is in a multi-particle form. From these results, it can be expected that as the number of unit particles constituting the lithium transition metal oxide included in the positive electrode active materials according to Examples 1 to 5 decreases, the intergranular cracks in the lithium transition metal oxide are reduced, thereby improving the lifetime and stability of the lithium secondary batteries using the lithium transition metal oxide as the positive electrode active material.

Meanwhile, it can be confirmed that the lifetime retention of the lithium secondary batteries using the positive electrode active materials according to Comparative Examples 2 and 3, in which the number of unit particles is reduced compared with Comparative Example 1, is lower than the lifetime retention of the lithium secondary batteries using the positive electrode active materials according to Examples 1 to 5.

From these results, it can be expected that the lithium transition metal oxides included in the positive electrode active materials according to Examples 1 to 5 improve resistance to strain caused by random volume contraction/expansion of the unit particles during repeated charging/discharging by suppressing and/or alleviating the formation of cracks in the unit particles, thereby improving the lifetime characteristics of the lithium secondary batteries using the lithium transition metal oxides as the positive electrode active materials. In addition, it can be confirmed that the lithium transition metal oxides included in the positive electrode active materials according to Examples 1 to 5 are also advantageous for improving capacity characteristics when the formation of cracks in the unit particles is suppressed and/or alleviated.

As described above, according to the present invention, by inducing growth of primary particles, which are unit particles constituting the lithium transition metal oxide, so that the lithium transition metal oxide has a single particle form composed of one unit particle and/or a quasi-single particle form formed by agglomeration of 30 or less unit particles, intergranular cracks in the lithium transition metal oxide can be reduced. By reducing the intergranular cracks in the lithium transition metal oxide, it is possible to improve lifetime and stability of a lithium secondary battery using the lithium transition metal oxide as a positive electrode active material.

In addition, according to the present invention, by suppressing and/or mitigating the formation of cracks in the unit particles, resistance to strain caused by volume contraction and expansion of the unit particles during repeated charge and discharge cycles can be improved, thereby providing an advantage that a lithium secondary battery using the lithium transition metal oxide as a positive electrode active material can exhibit long-term stable electrochemical characteristics.

Although embodiments of the present invention have been described above, those skilled in the art can make various modifications and changes to the present invention by adding, changing, or deleting components without departing from the spirit of the present invention as set forth in the claims, which will be included within the scope of rights of the present invention.

## Claims

1. A positive electrode active material comprising a lithium transition metal oxide capable of intercalation/deintercalation of lithium,
wherein the lithium transition metal oxide has at least one form selected from a single particle form composed of one unit particle and a quasi-single particle form formed by agglomeration of 30 or less unit particles,
and wherein a ratio (a1/a) of a total area (a1) of cracks present on the surface of the unit particle relative to a surface area (a) of the unit particle as observed from a surface SEM image of the lithium transition metal oxide is 10% or less.

2. The positive electrode active material of claim 1,
wherein, when a half radius of the unit particle measured from a cross-sectional SEM image of the unit particle is defined as r, cracks in a surface portion where a distance (d) from the center of the unit particle satisfies (2/3)r < d are more than cracks in a central portion where a distance (d) from the center of the unit particle satisfies 0 ≤ d ≤ (2/3)r.

3. The positive electrode active material of claims 1 or 2,
wherein, when a major axis length measured from a surface shape of the unit particle observed from a surface SEM image of the lithium transition metal oxide is defined as r1,
a ratio (a2/a) of a total area (a2) of cracks present in a region where a distance (d1) from the outermost surface of the unit particle satisfies d1 ≤ (1/4)r1, relative to a total surface area (a) of the unit particle observed from the surface SEM image of the lithium transition metal oxide, is 5% or less.

4. The positive electrode active material of any one of claims 1 to 3,
wherein, when a minor axis length measured from a surface shape of the unit particle observed from a surface SEM image of the lithium transition metal oxide is defined as r2, a ratio (a3/a) of a total area (a3) of cracks present in a region where a distance (d2) from the outermost surface of the unit particle satisfies d2 ≤ (1/3)r2, relative to a total surface area (a) of the unit particle observed from the surface SEM image of the lithium transition metal oxide, is 9% or less.

5. The positive electrode active material of any one of claims 1 to 4,
wherein the lithium transition metal oxide comprises lithium and a transition metal, and a content of nickel among the transition metal is 50 mol% or more.

6. The positive electrode active material of any one of claims 1 to 5,
wherein an average particle diameter (D₅₀) of the lithium transition metal oxide present in the single particle form is 2.0 µm or more and 10.0 µm or less.

7. The positive electrode active material of any one of claims 1 to 6,
wherein an average particle diameter (D₅₀) of the lithium transition metal oxide present in the quasi-single particle form is 3.0 µm or more and 20.0 µm or less.

8. The positive electrode active material of any one of claims 1 to 7,
wherein a number of unit particles observed from a surface SEM image of the lithium transition metal oxide present in the quasi-single particle form is 20 or less.

9. The positive electrode active material of any one of claims 1 to 8,
wherein a surface shape of the unit particle observed from a surface SEM image of the lithium transition metal oxide has a major axis and a minor axis, and an average value of a length of the major axis of the unit particle is 2.0 µm or more and 10.0 µm or less.

10. The positive electrode active material of any one of claims 1 to 9,
wherein a surface shape of the unit particle observed from a surface SEM image of the lithium transition metal oxide has a major axis and a minor axis, and an average value of a length of the minor axis of the unit particle is 1.0 µm or more and less than 10.0 µm.

11. The positive electrode active material of any one of claims 1 to 10,
wherein a content of alkali metal and alkaline earth metal among the total elements excluding lithium in the lithium transition metal oxide is 0.1 mol% or more and 5.0 mol% or less.

12. The positive electrode active material of any one of claims 1 to 11, wherein the lithium transition metal oxide is represented by Chemical Formula 1 below:
[Chemical Formula 1] LiₐNi_{1-(b+c+d+e)}Co_{b}Mn_{c}M1_{d}M2ₑO₂
wherein, in Chemical Formula 1,
M1 is at least one selected from Na, K, Mg, Ca, Sr, Ba, and Rb,
M2 is at least one selected from B, Ce, Hf, Ta, Cr, F, Al, V, Ti, Fe, Zr, Zn, Si, Y, Nb, Ga, Sn, Mo, W, P, Ge, Nd, Gd, and Cu,
0.85≤a≤1.15, 0≤b≤0.20, 0≤c≤0.20, 0.001≤d≤0.05, 0≤e≤0.10, and 0.5≤1-(b+c+d+e)<1.0.

13. A positive electrode comprising the positive electrode active material of any one of claims 1 to 12,

14. A lithium secondary battery using the positive electrode of claim 13.
